# EUROPÄISCHE PATENTSCHRIFT

(11) **EP 2 266 846 B1**
(45) Veröffentlichungstag und Bekanntmachung des Hinweises auf die Patenterteilung: **17.04.2013**
(21) Anmeldenummer: 10165273.3
(22) Anmeldetag: 08.06.2010
(51) Int. Cl.: B60R 19/03, B60R 19/34, B60R 19/36, B60R 19/26, F16F 7/12

(54) **Energieabsorptionselement für Crashmanagementsysteme an Kraftfahrzeugen**
Energy absorption element for crash management systems on motor vehicles
Elément d'absorption d'énergie pour systèmes de gestion de collisions sur des véhicules automobiles

(30) Priorität: 08.06.2009 DE 102009024549
(43) Veröffentlichungstag der Anmeldung: 29.12.2010
(73) Patentinhaber: Faurecia Exteriors GmbH, 31655 Stadthagen (DE)
(72) Erfinder: Sautner, Anton, 91757, Treuchtlingen (DE); Diaz Sanchez, Francisco Javier, 91785, Pleinfeld (DE); Ortner, Florian, 91781, Weissenburg (DE); Kunze, Manfred, 91757, Treuchtlingen (DE); Eckert, Rolf, 64546, Mörfelden-Walldorf (DE)
(74) Vertreter: Tischner, Oliver

(56) Entgegenhaltungen:
- EP-A2- 0 909 682
- DE-A1- 3 809 208
- DE-A1- 4 312 407
- US-A- 3 893 726

## Beschreibung

Die Erfindung betrifft ein Energieabsorptionselement für Crashmanagementsysteme an Kraftfahrzeugen mit einem elastischen und einem plastischen Deformationsbereich zur Befestigung zwischen den Längsträgern und dem Bumper-Beam eines Kraftfahrzeugs.

### Stand der Technik:

Energieabsorptionselemente für Crashmanagementsysteme an Kraftfahrzeugen werden im Allgemeinen als steife Stahlblechstrukturen oder Stranggussprofile aus Aluminium serienmäßig eingesetzt und weisen einen plastischen irreversiblen Deformationsbereich auf. Bei einigen Crashmanagementsystemen sind zusätzlich Stahlfedern eingebracht, wodurch auch ein reversibler elastischer Bereich geschaffen ist. DE 3 809 208 A1 beschreibt ein Energie-absorptionselement gemäß dem Oberbegriff des Patentanspruchs 1.

### Kritik am Stand der Technik:

Energieabsorptionselemente aus Stahl sind sehr schwer und für ihre Herstellung sind teure Stanz- und Prägewerkzeuge, sowie Fertigungs- und Oberflächenschutzprozesse notwendig. Profile aus Aluminium ermöglichen eine Gewichtsreduktion, ihre Herstellung ist jedoch mit hohen Investitions- und Prozesskosten verbunden. Bei dieser Art von Energieabsorptionselementen erfolgt die Energieaufnahme durch plastische Verformung. Eine reversible Verformung ist im Allgemeinen nicht möglich. Eine Ausnahme sind die Energieabsorptionselemente mit integrierter Feder. Der elastische Bereich dieser Elemente beschränkt sich jedoch auf den Federweg und die Federkonstante.

Die Energieaufnahmefähigkeit von Aluminiumschaum ist zwar sehr gut, für den Einsatz als Energieabsorptionselemente ist dieses Material jedoch nicht geeignet, da es bei nicht axialen Kräften sofort abbricht ohne die Funktion zu erfüllen. Eine elastische Verformung ist nicht gegeben.

Extrudierte Wabenprofile eignen sich gut als Energieabsorptionselemente, aber ihre Herstellung ist kostspielig, da für die Befestigung zusätzliche Bauteile und Nacharbeit notwendig sind. Eine elastische Verformung ist nicht möglich.

Verrippte Thermoplastspritzgussstrukturen können so ausgelegt werden, dass die gesamte Crashenergie aufgenommen wird. Eine Trennung zwischen einem elastischen und einem steifen Bereich ist jedoch schwer realisierbar.

Der Erfindung liegt die Aufgabe zugrunde, ein Energieabsorptionselement nach dem Oberbegriff des Anspruchs 1 so zu verbessern, dass technisch einfach und kostengünstig Bereiche mit unterschiedlichen Steifigkeits- und Elastizitätscharakteristiken geschaffen werden können.

Erfindungsgemäß wird diese Aufgabe dadurch gelöst, dass das Energieabsorptionselement aus einem vorderen Trägerteil und einem hinteren Trägerteil aus einem Polymerwerkstoff besteht und beide Trägerteile bei einem Crash ineinander verschiebbar ausgebildet sind und zwischen den beiden Trägerteilen ein Pufferelement angeordnet ist. Durch das Pufferelement ist ein elastischer Bereich geschaffen und durch die beiden Trägerteile lässt sich ein Bereich mit irreversibler Deformation schaffen.

In einer bevorzugten Ausgestaltung besteht das vordere Trägerteil aus einem vorderen Anlageteil, welches axial in ein vorderes Führungsrohr übergeht und das hintere Trägerteil aus einem hinteren Anlageteil besteht, welches axial in ein hinteres Führungsrohr übergeht, wobei der innere Durchmesser des hinteren Führungsrohrs etwas größer als der äußere Durchmesser des vorderen Führungsrohrs ist, so dass das vordere Führungsrohr in das hintere Führungsrohr eingeschoben werden kann.

Bevorzugt ist das vordere Führungsrohr mit dem hinteren Führungsrohr lösbar verbunden. Zur lösbaren Verbindung ist in einer Ausführungsform das vordere Führungsrohr mit dem hinteren Führungsrohr verrastet. Hierzu sind bevorzugt im hinteren Führungsrohr Ausnehmungen angeordnet in die Befestigungsklipse am vorderen Führungsrohr einrasten.

In einer anderen Ausführungsform sind die Enden der Führungsrohre über eine Sollbruchstelle miteinander verbunden.

Das Pufferelement ist vorteilhaft zwischen dem vorderen Anlageteil und dem hinteren Anlageteil angeordnet und besteht aus einem Elastomer.

Vorteilhafterweise weist das Pufferelement auf seiner Außenfläche radial umlaufende Rippen und in Längsrichtung angeordnete Längsrippen auf.

Zur Schaffung einer plastischen irreversiblen Deformation sind in einer Ausführungsform auf der Außenfläche des vorderen Führungsrohrs in Längsrichtung verlaufende Scherrippen angeordnet. Bevorzugt erstrecken sich die Scherrippen, ausgehend vom vorderen Anlageteil, nur über einen Teil der Außenfläche des vorderen Führungsrohrs.

In einer anderen Ausführungsform erstrecken sich die Scherrippen, ausgehend vom vorderen Anlageteil, im Wesentlichen über den gesamten Teil der Außenfläche des vorderen Führungsrohrs.

In einer erfinderischen Ausführungsform ist am vorderen Anlageteil an der dem vorderen Führungsrohr entgegengesetzten Seite ein glasfaserverstärktes Profil angeordnet.

Bevorzugt besteht das glasfaserverstärkte Profil aus einer Wabenstruktur, die aus einer vorderen und einer hinteren Rampe mit dazwischen liegenden geradlinigen Streben besteht und diese Streben zu den Rampen in einem Winkel 80°> α > 40°, bevorzugt 60° angeordnet sind.

Das glasfaserverstärkte Profil ist bevorzugt in den Bumper-Beam integriert.

Erfindungsgemäß bestehen das vordere und das hintere Trägerteil des Energieabsorptionselements aus einem Polymerwerkstoff.

Die erfindungsgemäße Verwendung von Polymerwerkstoffen mit unterschiedlichen Eigenschaften bei der Herstellung von Energieabsorptionselementen ermöglicht Bereiche mit unterschiedlichen Steifigkeits- und Elastizitätscharakteristiken zu definieren. Diese Eigenschaft ist von großem Vorteil, um den Anforderungen an die Energieabsorptionselemente moderner Fahrzeuge gerecht zu werden.

Die elastischen Bereiche werden so angepasst, dass sie unter Ausnutzung der vorgegebenen Deformationswege bei angemessenem Druckniveau genügend Energie aufnehmen, um die Anforderungen des Fußgängerschutzes bzw. Stoßfängergesetze zu erfüllen ohne dauernde Deformation oder Bruchstellen.

Die hochsteifen Bereiche werden so ausgelegt, dass sie auf der vorgegebenen Deformationsstrecke die gesamte Crashenergie gemäß AZT-Test aufnehmen und dabei die vorgegebene Kraftübertragungsgrenze auf den Längsträgern nicht überschreiten.

Aufgrund der niedrigen Dichte der Materialien tragen Crashelemente aus Polymeren zu Gewichtsreduktion bei und lassen sich kostengünstig im Spritzgießverfahren herstellen.

Nachfolgend wird die Erfindung anhand mehrerer Figuren weiter erläutert.

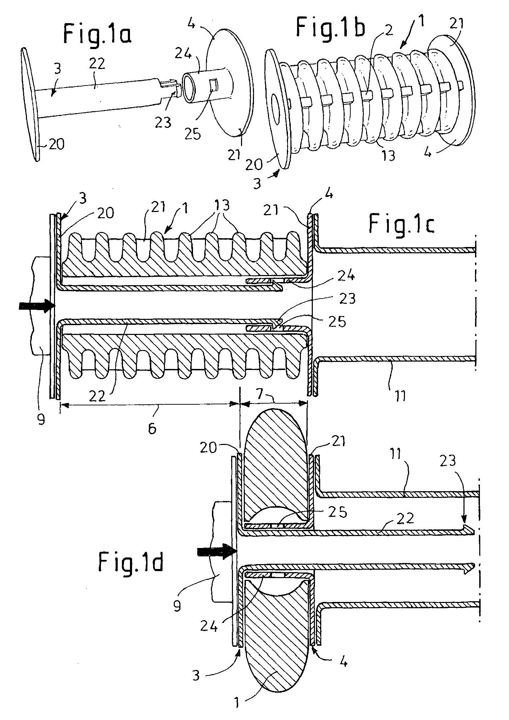

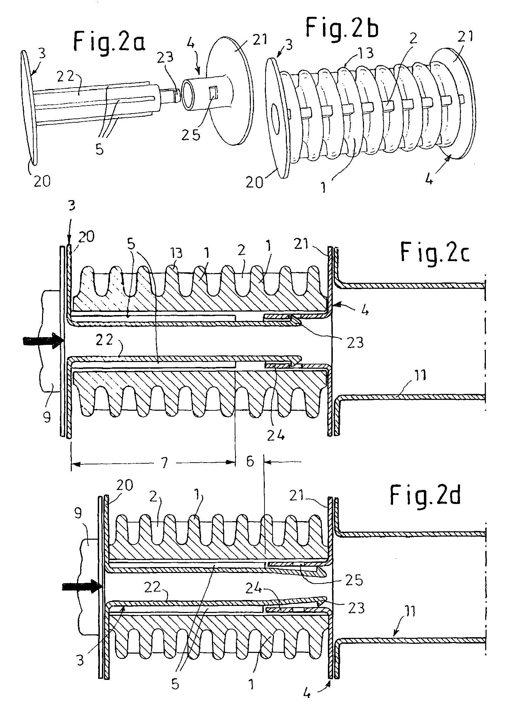

In den Figuren 1 und 2 sind zwei verschiedene Ausführungsformen eines erfindungsgemäßen Energieabsorptionselements gezeigt.

Ein Pufferelement 1 aus Elastomer wird auf eine 2-teilige Trägerstruktur 8 aus einem vorderen 3 und einem hinteren Trägerteil 4 montiert. Die Trägerstruktur 8 wird durch Befestigungsklips 23 zusammengehalten und bildet die Verbindung zum Bumper-Beam 9 im vorderen Bereich und zum Längsträger 11 im hinteren Bereich. Vor dem Bumper-Beam 9 befindet sich der Stoßfänger (in den Figuren 1-3 nicht gezeigt) des Kraftfahrzeugs.

Im Crashfall wird die Energie durch elastische (reversible) Verformung des Pufferelements 1 aufgenommen, wobei die Menge der aufgenommenen Energie entlang des elastischen Deformationsbereiches 6, durch die elastischen Eigenschaften des Materials des Pufferelements und die Anzahl bzw. Dicke der Längsrippen 2 (siehe weiter unten) an die Anforderungen angepasst werden. Während der elastischen Verformung wird der vordere Trägerteil 3 in den hinteren Trägerteil 4 beschädigungsfrei reversibel hineingeschoben.

Nach dem elastischen Deformationsbereich wird Energie durch plastische Verformung der Crashboxkomponenten (siehe weiter unten) entlang des plastischen Deformationsbereiches 7 aufgenommen. Die Menge der Energieaufnahme wird durch die Materialeigenschaften, die Anzahl und Dicke der Scherrippen 5 (siehe weiter unten) gemäß Anforderungen angepasst.

Das Pufferelement besteht aus einem Elastomer. Unter Elastomere sind formfeste, aber elastisch verformbare Kunststoffe verstanden, deren Glasübergangspunkt sich unterhalb der Raumtemperatur befindet. Die Kunststoffe können sich bei Zug- und Druckbelastung elastisch verformen, finden aber danach wieder in ihre ursprüngliche, unverformte Gestalt zurück.

### Ausführungsform eines erfindungsgemäßen Energieabsorptionselements gemäß der Figuren 1a, 1b. 1c, 1d

Die erfindungsgemäßen Energieabsorptionselemente umfassen in dieser Ausführungsform ein vorderes Trägerteil 3 und ein hinteres Trägerteil 4, die ineinander gesteckt werden. Das vordere Trägerteil 3 besteht aus einem vorderen Anlageteil 20, welches axial in ein vorderes Führungsrohr 22 übergeht. An seinem dem Anlageteil 20 abgewandten Ende weist das vordere Führungsrohr 22 nach außen stehende Befestigungsklips 23 auf. Das hintere Trägerteil 4 besteht ebenfalls aus einem hinteren Anlageteil 21, welches axial in ein hinteres Führungsrohr 24 übergeht. Der innere Durchmesser des hinteren Führungsrohrs 24 ist etwas größer als der äußere Durchmesser des vorderen Führungsrohrs 22, so dass dieses in das hintere Führungsrohrs 24 eingeschoben werden kann. Zur Befestigung sind im hinteren Führungsrohr 24 Ausnehmungen 25 eingebracht. Beim Einschieben rasten die Befestigungsklips 23 in die Ausnehmungen 25 ein.

Figur 1a zeigt das vordere Trägerteil 3 und das hintere Trägerteil 4 vor dem Einschieben. Figur 1c zeigt die beiden Trägerteile 3, 4 im ineinander geschobenen Zustand. Dies ist der Normalzustand ohne die Kraftbeaufschlagung bei einem Crash. Zwischen den Anlageteilen 20, 21 befindet sich ein Pufferelement 1 aus einem Elastomer mit radial umlaufenden Rippen 13 und Längsrippen 2 auf der Außenseite. Figur 1b zeigt das Energieabsorptionselement im zusammen gebauten Zustand. Figur 1c zeigt das Energieabsorptionselement im Längsschnitt im Einbauzustand. Das hintere Trägerteil 4 ist mit dem Längsträger 11 verbunden und das vordere Trägerteil 3 ist am Bumper-Beam 9 befestigt.

Bei einer leichteren Kraftbeaufschlagung wird der Bumper-Beam 9 und damit das vordere Trägerteil 3 in Richtung zum hinteren Trägerteil 4 elastisch verschoben. Dieser elastische Deformationsbereich ist in Figur 1c mit dem Bezugszeichen 6 markiert. Das vordere Trägerteil 3 wird dabei in das hintere Trägerteil 4 geschoben. Die Befestigungsklipse 23 lösen sich aus den Ausnehmungen 25. Bei einer größeren Kraftbeaufschlagung reicht die Energieaufnahme durch den elastischen Deformationsbereich 6 nicht mehr aus. Es beginnt der plastische Deformationsbereich, der mit dem Bezugszeichen 7 gekennzeichnet ist.

Aufgrund des langen elastischen Deformationsbereiches 6 eignet sich dieses Energieabsorptionselement besonders für die Anwendung bei kleineren leichteren Personenfahrzeugen, da die Elastizität sowohl für die Aufnahme der Energie des Fußgängerschutzes und den gesetzlichen Anforderungen als auch für die Aufnahme der Energie des AZT-Testes ausgelegt werden kann. Damit können bei einem Niedriggeschwindigkeitscrash die Reparaturkosten reduziert werden.

### Alternative Ausführungsform eines erfindungsgemäßen Energieabsorptionselements gemäß der Figuren 2a, 2b, 2c, 2d

Die Figuren 2a, 2b, 2c, 2d zeigen eine erfindungsgemäße Ausführungsform, die ähnlich der von den Figuren 1a, 1b, 1c,1d ist, nur sind zusätzlich Scherrippen 5 vorgesehen. Gleiche Bezugszeichen zeigen den gleichen Gegenstand.

Der Unterschied zu der Ausführungsform von den Figuren 1a, 1b, 1c, 1d besteht darin, dass auf der Außenfläche des vorderen Führungsrohrs 22 in Längsrichtung verlaufende Scherrippen 5 angeordnet sind. Erfindungsgemäß erstrecken sich diese Scherrippen 5 ausgehend vom Anlageteil 20 nur über einen Teil der Außenfläche des vorderen Führungsrohrs 22. Es bleibt zwischen dem zum Befestigungsklips 23 gewandten Ende und dem zu den Scherrippen 5 gewandten Ende des Führungsrohrs 24 ein Bereich ohne Scherrippen 5, der den elastischen Deformationsbereich 6 bildet. Übersteigt die wirkende Kraft die Kraft, die durch den elastischen Deformationsbereich 6 aufgenommen werden kann, schiebt sich das vordere Führungsrohr 22 weiter in das hintere Führungsrohr 24 hinein, wobei dann die Scherrippen 5 abgeschert werden. Dies ist dann der plastische Deformationsbereich 7. Bild 2c zeigt das Energieabsorptionselement im Einbauzustand ohne äußere Krafteinwirkung. Bild 2d zeigt das Energieabsorptionselement im Einbauzustand mit einer äußeren Krafteinwirkung, die jedoch vom elastischen Deformationsbereich 6 aufgefangen wird.

Dieses Energieabsorptionselement ist zur Anwendung in Mittelklasse Personenfahrzeugen konzipiert. Durch die Scherrippen 5 wird die höhere Energiemenge beim AZT-Test aufgenommen. Der kleine elastische Deformationsbereich 6 wird für die Aufnahme der Energie des Fußgängerschutzes und gesetzlichen Anforderungen ausgelegt.

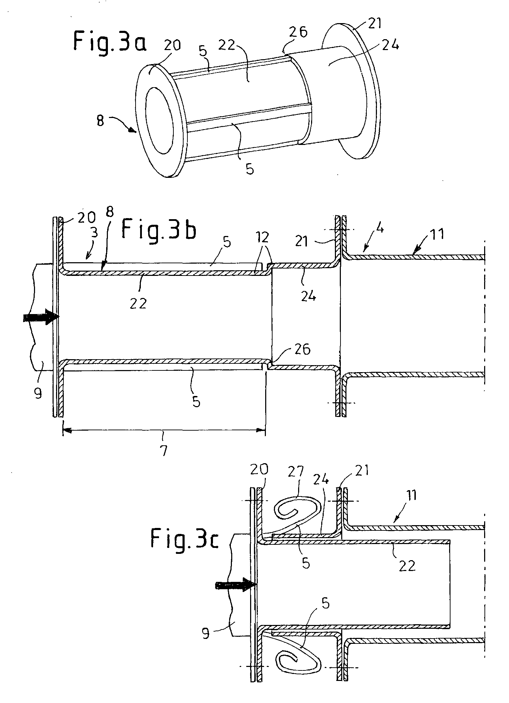

### Alternative Ausführungsform eines erfindungsgemäßen Energieabsorptionselements gemäß der Figuren 3a, 3b, 3c

Die Figuren 3a, 3b, 3c zeigen eine erfindungsgemäße Ausführungsform in der das vordere Führungsrohr 22 mit dem hinteren Führungsrohr 24 über eine Sollbruchstelle 26 verbunden ist. Die Scherrippen 5 erstrecken sich bei dieser Variante nahezu über die gesamte Außenfläche des vorderen Führungsrohrs 22, d.h. sie liegen nahezu an der Sollbruchstelle 26 an. Ein elastischer Deformationsbereich ist in dieser Ausführungsform nicht vorgesehen. Bei einem Crash d.h. einer Krafteinwirkung bricht die Sollbruchstelle 26 und das hintere Führungsrohr 24 schert die Scherrippen 5 ab. Die abgescherten Scherrippen 5 sind in Figur 3c mit dem Bezugszeichen 27 gekennzeichnet. Der plastische Deformationsbereich 7 ist durch die axiale Länge der Scherrippen 5 einstellbar. Durch die Anzahl und die Dicke der Scherrippen 5 lässt sich die erforderliche Abscherkraft genau einstellen.

Dieses Energieabsorptionselement mit der 2-stufigen Rohrstruktur 8 (siehe Figuren 3a, 3b) ist zur Anwendung in großen Personenfahrzeugen und kleinen Transportern konzipiert. Die große Anzahl an Scherrippen 5 sowie Reibungsenergie, die beim Eintauchen der beiden Rohrstufen 8 ineinander entsteht, ermöglichen die hohe Energiemenge des AZT-Testes zu absorbieren.

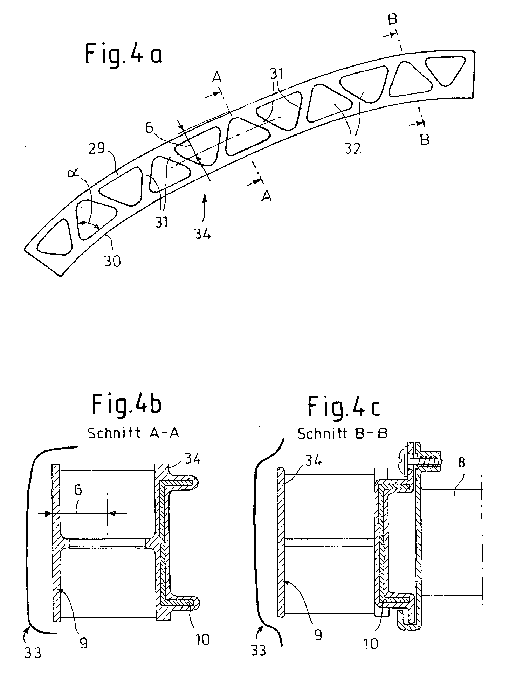

Der elastische Deformationsbereich 6 kann bei diesem Konzept in den Bumper-Beam 9 integriert (siehe Figuren 4a, 4b, 4c) werden, wobei die Elastizität des Bereiches durch die Materialeigenschaften sowie die Dicke, Abstand und Neigung der Scherrippen 5 an die Anforderungen angepasst wird. Für die reversible elastische Aufnahme geringerer Kräfte umfasst der Bumper-Beam 9 eine Art Wabenstruktur 34, die aus einer vorderen 29 und einer hinteren Rampe 30 mit dazwischen liegenden geradlinigen Streben 31 besteht. Diese Streben 31 sind zu den Rampen 29, 30 in einem Winkel 80° > α > 40°, bevorzugt 60° angeordnet. Zwischen den Streben 31 ist jeweils eine dreieckförmige Ausnehmung 32 angeordnet.

Die Figuren 4b und 4c zeigen jeweils einen Schnitt A-A und B-B von Figur 4a.

Bei Bedarf kann die Festigkeit des steifen Bereiches des Bumper-Beams 9 durch ein unidirektional-endlos-glasfaserverstärktes Profil 10 erhöht werden (siehe Figuren 4b und 4c. Dieses Profil 10 ist in der hier gezeigten Ausführungsform direkt an der 2-stufigen Rohrstruktur 8 (siehe Bild 4c) befestigt. Eine Krafteinwirkung auf den Stoßfänger 33 bewirkt seine Verformung mit anschließender Krafteinwirkung auf die Wabenstruktur 34. Der elastische Deformationsbereich der Wabenstruktur 34 ist in der Figur 4b mit dem Bezugszeichen 6 gekennzeichnet. Kann der elastische Deformationsbereich 6 keine Energie mehr reversibel aufnehmen, verformt sich die Wabenstruktur 34. Die Energie wirkt dann auf das unidirektional-endlos-glasfaserverstärkte Profil 10 und die 2-stufige Rohrstruktur 8 geleitet.

## Patentansprüche

1. Energieabsorptionselement für Crashmanagementsysteme an Kraftfahrzeugen mit einem elastischen (6) und einem plastischen Deformationsbereich (7) zur Befestigung zwischen den Längsträgern (11) und dem Bumper-Beam (9) eines Kraftfahrzeugs, **dadurch gekennzeichnet, dass** das Energieabsorptionselement aus einem vorderen Trägerteil (3) und einem hinteren Trägerteil (4) aus einem Polymerwerkstoff besteht und beide Trägerteile (3, 4) bei einem Crash ineinander verschiebbar ausgebildet sind und zwischen den beiden Trägerteilen (3, 4) ein Pufferelement (1) angeordnet ist.

2. Energieabsorptionselement nach Anspruch 1, **dadurch gekennzeichnet, dass** das vordere Trägerteil (3) aus einem vorderen Anlageteil (20) besteht, welches axial in ein vorderes Führungsrohr (22) übergeht und das hintere Trägerteil (4) aus einem hinteren Anlageteil (21) besteht, welches axial in ein hinteres Führungsrohr (24) übergeht, wobei der innere Durchmesser des hinteren Führungsrohrs (24) etwas größer als der äußere Durchmesser des vorderen Führungsrohrs (22) ist, so dass das vordere Führungsrohr (22) in das hintere Führungsrohr (24) eingeschoben werden kann.

3. Energieabsorptionselement nach Anspruch 1 oder 2, **dadurch gekennzeichnet, dass** das vordere Führungsrohr (22) mit dem hinteren Führungsrohr (24) lösbar verbunden ist.

4. Energieabsorptionselement nach Anspruch 3, **dadurch gekennzeichnet, dass** das vordere Führungsrohr (22) mit dem hinteren Führungsrohr (24) verrastet ist.

5. Energieabsorptionselement nach Anspruch 4, **dadurch gekennzeichnet, dass** im hinteren Führungsrohr (24) Ausnehmungen (25) angeordnet sind in die Befestigungsklipse (23) am vorderen Führungsrohr (22) einrasten.

6. Energieabsorptionselement nach Anspruch 3, **dadurch gekennzeichnet, dass** die Enden (12) der Führungsrohre (22, 24) über eine Sollbruchstelle (26) miteinander verbunden sind.

7. Energieabsorptionselement nach einem der Ansprüche 2 bis 6, **dadurch gekennzeichnet, dass** das Pufferelement (1) zwischen dem vorderen Anlageteil (20) und dem hinteren Anlageteil (21) angeordnet ist und aus einem Elastomer besteht.

8. Energieabsorptionselement nach einem der Ansprüche 1 bis 7, **dadurch gekennzeichnet, dass** das Pufferelement (1) auf seiner Außenfläche radial umlaufende Rippen (13) und in Längsrichtung angeordnete Längsrippen (2) aufweist.

9. Energieabsorptionselement nach einem der Ansprüche 1 bis 8, **dadurch gekennzeichnet, dass** auf der Außenfläche des vorderen Führungsrohrs (22) in Längsrichtung verlaufende Scherrippen (5) angeordnet sind.

10. Energieabsorptionselement nach Anspruch 9, **dadurch gekennzeichnet, dass** sich die Scherrippen (5), ausgehend vom vorderen Anlageteil (20), nur über einen Teil der Außenfläche des vorderen Führungsrohrs (22) erstrecken.

11. Energieabsorptionselement nach Anspruch 9, **dadurch gekennzeichnet, dass** sich die Scherrippen (5), ausgehend vom vorderen Anlageteil (20), im Wesentlichen über den gesamten Teil der Außenfläche des vorderen Führungsrohrs (22) erstrecken.

12. Energieabsorptionselement nach einem der Ansprüche 1 bis 11, **dadurch gekennzeichnet, dass** am vorderen Anlageteil (20) an der dem vorderen Führungsrohr (22) entgegen gesetzten Seite ein glasfaserverstärktes Profil (10) angeordnet ist.

13. Energieabsorptionselement nach Anspruch 12, **dadurch gekennzeichnet, dass** das glasfaserverstärkte Profil (10) aus einer Wabenstruktur (34) besteht, die aus einer vorderen (29) und einer hinteren Rampe (30) mit dazwischen liegenden geradlinigen Streben (31) besteht und diese Streben (31) zu den Rampen (29, 30) in einem Winkel 80°> α > 40°, bevorzugt 60° angeordnet sind.

14. Energieabsorptionselement nach Anspruch 13, **dadurch gekennzeichnet, dass** das glasfaserverstärkte Profil (10) in den Bumper-Beam (9) integriert ist.

## Claims

1. Energy absorption element for crash management systems in motor vehicles with an elastic (6) and a plastic deformation area (7) to be fastened between two longitudinal beams (11) and the bumper beam (9) of a motor vehicle, **characterised in that** the energy absorption element consists of a front support (3) and a rear support (4) of a polymer material, and both supports (3, 4) are configured to move into one another in the event of a crash, and a buffer element (1) is arranged between the two supports (3, 4).

2. Energy absorption element according to claim 1, **characterised in that** the front support (3) consists of a front attachment part (20), which transitions axially into a front guide tube (22), and the rear support (4) consists of a rear attachment part (21) that transitions axially into a rear guide tube (24), whereby the internal diameter of the rear guide tube (24) is somewhat greater than the external diameter of the front guide tube (22), such that the front guide tube (22) can be inserted into the rear guide tube (24).

3. Energy absorption element according to claim 1 or 2, **characterised in that** the front guide tube (22) is detachably connected with the rear guide tube (24).

4. Energy absorption element according to claim 3, **characterised in that** the front guide tube (22) locks in place with the rear guide tube (24).

5. Energy absorption element according to claim 4, **characterised in that** recesses (25) are arranged in the rear guide tube (24) in which fastening clips (23) on the front guide tube (22) lock in place.

6. Energy absorption element according to claim 3, **characterised in that** the ends (12) of the guide tubes (22, 24) are connected to one another via a predetermined breaking point (26).

7. Energy absorption element according to any of claims 2 - 6, **characterised in that** the buffer element (1) is arranged between the front attachment part (20) and the rear attachment part (21) and consists of an elastomer.

8. Energy absorption element according to any of claims 1 - 7, **characterised in that** the buffer element (1) has radial ribs (13) on its external surface and has longitudinal ribs (2) in the longitudinal direction.

9. Energy absorption element according to any of claims 1 - 8, **characterised in that** longitudinal shearing ribs (5) are arranged on the external surface of the front guide tube (22).

10. Energy absorption element according to claim 9, **characterised in that** the shearing ribs (5), starting at the front attachment part (20), only extend over part of the external surface of the front guide tube (22).

11. Energy absorption element according to claim 9, **characterised in that** the shearing ribs (5), starting at the front attachment part (20), substantially extend over the entire part of the front guide tube (22).

12. Energy absorption element according to any of claims 1 - 11, **characterised in that** a fibreglass-reinforced profile (10) is arranged on the front attachment part (20) on the side opposite the front guide tube (22).

13. Energy absorption element according to claim 12, **characterised in that** the fibreglass-reinforced profile (10) consists of a honeycomb structure (34), consisting of a front (29) and a rear ramp (30) with straight struts (31) lying between them, and these struts (31) are arranged at an angle of 80 ° > α > 40 °, preferably 60 °.

14. Energy absorption element according to claim 13, **characterised in that** the fibreglass-reinforced profile (10) is integrated into the bumper beam (9).

## Revendications

1. Elément d'absorption d'énergie pour des système de gestion de crash sur des véhicules à moteurs avec une zone de déformation élastique (6) et une zone de déformation plastique (7), destiné à être fixé entre les longerons (11) et la poutre de pare-choc (9) d'un véhicule à moteur, **caractérisé en ce que** l'élément d'absorption d'énergie est constitué d'une partie de support avant (3) et d'une partie de support arrière (4) en matériau polymère et les deux parties de support (3, 4) sont conçues de façon à ce qu'elles coulissent l'une dans l'autre lors d'un crash et un élément tampon (1) est disposé entre les deux parties de supports (3, 4).

2. Elément d'absorption d'énergie selon la revendication 1, **caractérisé en ce que** la partie de support avant (3) est constitué d'une partie d'appui avant (20) qui se transforme axialement en un tube de guidage avant (22) et la partie de support arrière (4) est constituée d'une partie d'appui arrière (21) qui se transforme axialement en un tube de guidage arrière (24), le diamètre intérieur du tube de guidage arrière (24) étant un peu supérieur au diamètre extérieur du tube de guidage avant (22), de façon à ce que le tube de guidage avant (22) puisse coulisser dans le tube de guidage arrière (24).

3. Elément d'absorption d'énergie selon la revendication 1 ou 2, **caractérisé en ce que** le tube de guidage avant (22) est relié de manière amovible avec le tube de guidage arrière (24).

4. Elément d'absorption d'énergie selon la revendication 3, **caractérisé en ce que** le tube de guidage avant (22) est emboîté avec le tube de guidage arrière (24).

5. Elément d'absorption d'énergie selon la revendication 4, **caractérisé en ce que**, dans le tube de guidage arrière (24), des évidements (25) sont réalisés, dans lesquels les clips de fixations (23) s'emboîtent avec le tube de guidage avant (22).

6. Elément d'absorption d'énergie selon la revendication 3, **caractérisé en ce que** les extrémités (12) des tubes de guidage (22, 24) sont reliés entre elles à l'aide d'un point de rupture (26).

7. Elément d'absorption d'énergie selon l'une des revendications 2 à 6, **caractérisé en ce que** l'élément tampon (1) est disposé entre la partie d'appui (20) et la partie d'appui arrière (21) et est constitué d'un élastomère.

8. Elément d'absorption d'énergie selon l'une des revendications 1 à 7, **caractérisé en ce que** l'élément tampon (1) comprend, sur sa surface externe, des nervures radiales (13) sur la périphérie et des nervures longitudinales (2) disposées dans la direction longitudinale.

9. Elément d'absorption d'énergie selon l'une des revendications 1 à 8, **caractérisé en ce que**, sur la surface externe du tube de guidage avant (22), des nervures de cisaillement (5) sont disposées dans la direction longitudinale.

10. Elément d'absorption d'énergie selon la revendication 9, **caractérisé en ce que** les nervures de cisaillement (5) s'étendent, à partir de la partie d'appui avant (20), seulement sur une partie de la surface externe du tube de guidage avant (22).

11. Elément d'absorption d'énergie selon la revendication 9, **caractérisé en ce que** les nervures de cisaillement (5) s'étendent, à partir de la partie d'appui avant (20), essentiellement sur l'ensemble de la surface externe du tube de guidage avant (22).

12. Elément d'absorption d'énergie selon l'une des revendications 1 à 11, **caractérisé en ce que**, sur la partie d'appui avant (20), sur le côté opposé au tube de guidage avant (22), se trouve un profilé (10) renforcé de fibres de verre.

13. Elément d'absorption d'énergie selon la revendication 12, **caractérisé en ce que** le profilé renforcé de fibres de verre (10) est constitué d'une structure alvéolée (34), elle-même constituée d'une rampe avant (29) et d'une rampe arrière (30) avec des entretoises droites (31) disposées entre elles et ces entretoises (31) sont disposées à un angle 80° > α > 40° par rapport aux rampes (29, 30), de préférence de 60°.

14. Elément d'absorption d'énergie selon la revendication 13, **caractérisé en ce que** le profilé renforcé de fibres de verre (10) est intégré dans la poutre de pare-choc (9).
